# EUROPÄISCHE PATENTANMELDUNG

(11) **EP 4 464 907 A1**
(43) Veröffentlichungstag der Anmeldung: **20.11.2024**
(21) Anmeldenummer: 24174791.4
(22) Anmeldetag: 08.05.2024
(51) Int. Cl.: F16C 19/36, F16C 33/46, F16C 33/51, F16C 33/54, F16C 33/50

(54) **KÄFIGSEGMENT FÜR EINEN SEGMENTKÄFIG**

(30) Priorität: 12.05.2023 DE 102023204453
(71) Anmelder: Aktiebolaget SKF, 415 50 Göteborg (SE)
(72) Erfinder: Radina, Alfred, 97711 Maßbach (DE); Soellner, Maximilian, 97494 Bundorf (DE); Friedrich, Hans-Juergen, 97486 Königsberg-Römershofen (DE); Kemmer, Martin, 97440 Werneck (DE); Tanke, Jesko-Henning, 97422 Schweinfurt (DE)
(74) Vertreter: Kuhstrebe, Jochen

(57) **Zusammenfassung**

Offenbart wird ein Käfigsegment für einen Segmentkäfig (1), insbesondere für Großwälzlager, wobei das Käfigsegment (1) eine Tasche (8) bildet, die dazu geeignet ist, zumindest einen Wälzkörper aufzunehmen, wobei das Käfigsegment (1) zumindest an einer Seitenfläche (18), die einer Lauffläche des zumindest einen Wälzkörpers (34-1) gegenüberliegt, zumindest ein inneres Anlageelement (14) aufweist, das in die Tasche (8) des Käfigsegments (1) auskragt und dazu ausgelegt ist, den zumindest einen Wälzkörper (34-1) zu kontaktieren, wobei das zumindest eine innere Anlageelement (14) durchgängig mit der Seitenfläche (18) verbunden ist.

## Beschreibung

### Technisches Gebiet

Vorliegende Erfindung betrifft ein Käfigsegment für einen Segmentkäfig gemäß dem Oberbegriff von Patentanspruch 1. Des Weiteren betrifft die vorliegende Erfindung einen Wälzlagerkäfig sowie ein Wälzlager.

### Technischer Hintergrund

Die Wälzkörper eines Wälzlagers können beispielsweise im Wälzlager durch Wälzlagerkäfige geführt und gehalten werden. Beispielsweise kann der Wälzlagerkäfig durch eine Mehrzahl von Käfigsegmenten gebildet sein, wobei ein Käfigsegment eine Tasche ausbildet, in der zumindest ein Wälzkörper aufgenommen werden kann. Im Gebrauch können die Wälzkörper zumindest teilweise an einer Fläche des Käfigsegments anlaufen.

Beispielsweise können Elemente vorgesehen sein, die dazu ausgebildet sind, einen in dem Käfigsegment aufgenommenen Wälzkörper zu führen. Dabei können diese Elemente gebildet werden, in dem ein Bereich einer Seitenfläche des Käfigsegments beispielsweise durch Schneiden abschnittsweise von der übrigen Seitenfläche getrennt wird und anschließend beispielsweise durch Biegen in das Element geformt wird. Dies kann jedoch dazu führen, dass, um eine ausreichende Festigkeit des Käfigsegments zu gewährleisten, eine Materialdicke für das Käfigsegment erhöht werden muss.

Es ist deshalb Aufgabe vorliegender Erfindung, ein Käfigsegment für einen Segmentkäfig mit einer verbesserten Festigkeit bereitzustellen.

### Zusammenfassung der Erfindung

Diese Aufgabe wird durch ein Käfigsegment für einen Segmentkäfig gemäß Patentanspruch 1 gelöst.

Im Folgenden wird ein Käfigsegment für einen Segmentkäfig, insbesondere für Großwälzlager, vorgeschlagen. Das Wälzlager kann insbesondere ein Rollenlager sein, d.h. ein Wälzlager mit rollenförmigen Wälzkörpern, wie zum Beispiel Kegelrollen, Zylinderrollen, Tonnen, Nadeln, und dergleichen. Des Weiteren bildet das Käfigsegment eine Tasche, die dazu geeignet ist, zumindest einen Wälzkörper aufzunehmen. Das Käfigsegment kann insbesondere zwei Seitenflächen aufweisen, die sich in axialer Richtung erstrecken und durch zwei Stirnflächen voneinander beabstandet sind. Dabei können die Stirnflächen in Umfangsrichtung verlaufen und den Endflächen bzw. Stirnflächen eines in der Tasche aufgenommenen Wälzkörpers gegenüberliegen.

Um die Festigkeit des Käfigsegments zu erhöhen, weist das Käfigsegment zumindest an einer Seitenfläche, die einer Lauffläche des zumindest einen Wälzkörpers gegenüberliegt, zumindest ein inneres Anlageelement auf, das in die Tasche des Käfigsegments auskragt und dazu ausgelegt ist, den zumindest einen Wälzkörper zu kontaktieren, wobei das zumindest eine innere Anlageelement durchgängig mit der Seitenfläche verbunden ist. Dadurch, dass das zumindest eine Anlageelement durchgängig mit der Seitenfläche verbunden ist, kann mehr Steifigkeit im Rollenanlagebereich erreicht werden. Außerdem kann bei gleichbleibender Festigkeit des Käfigsegments eine geringere Materialstärke bzw. Materialdicke für das Käfigsegment eingesetzt werden, wodurch insbesondere in Umfangsrichtung ein Platzbedarf für das Käfigsegment reduziert werden kann. Dies ermöglicht darüber hinaus mehr Wälzkörper im Wälzlager unterzubringen.

Weiterhin ermöglicht die immer noch vorhandene stoffschlüssige Verbindung zwischen dem inneren Anlageelement und der übrigen Seitenfläche, dass die Festigkeit des Käfigsegments verbessert wird. Des Weiteren kann verhindert werden, dass das zumindest eine innere Anlageelement im Gebrauch unter der Belastung durch die Wälzkörper einfedert, wie es beispielsweise bei freigeschnittenen Lösungen vorkommen kann. Ein weiterer Vorteil ist, dass das zumindest eine innere Anlageelement einfacher hergestellt werden kann.

Ferner kann das Käfigsegment mit mehreren inneren Anlageelementen versehen sein. Insbesondere können die beiden Seitenflächen des Käfigsegments, die der Lauffläche des in der Tasche aufgenommenen Wälzkörpers gegenüberliegen mit einem oder mehreren inneren Anlageelementen versehen sein. Bevorzugt weist das Käfigsegment an der zumindest einen Seitenfläche zumindest ein erstes und ein zweites inneres Anlageelement auf, die in axialer Richtung voneinander beabstandet sind. Beispielsweise kann jede Seitenfläche des Käfigsegments mit jeweils zwei inneren Anlageelemente versehen sein. Weiterhin kann die Anzahl der an einer Seitenfläche vorgesehenen inneren Anlageelemente von einer Grö-βe des Wälzkörpers abhängig sein. Insbesondere können die Seitenflächen von Käfigsegmenten für größere Wälzkörper bzw. für Wälzkörper mit einer größeren axialen Ausdehnung mit mehr als zwei innere Anlageelementen versehen sein.

Beispielsweise kann das zumindest eine Anlageelement durch Umformen des Käfigsegments gebildet sein. Dabei kann vorteilhafterweise ein Umformverfahren eingesetzt werden, bei dem die Seitenfläche des Käfigsegments nicht vollständig durchtrennt wird bzw. bei dem lediglich im Bereich einer Materialdicke der Seitenfläche umgeformt wird. Dies ermöglicht, dass durch die immer noch vorhandene stoffschlüssige Verbindung mehr Festigkeit erreicht wird als bei den mehr als die Blechdicke durchgesetzten und damit teilweise freigeschnittenen Laschen, welche bei Belastung zusätzlich auch einfedern können. Beispielsweise kann das zumindest eine innere Anlageelement geprägt sein.

Bevorzugt entspricht eine Materialdicke des inneren Anlageelements im Wesentlichen der Materialdicke der übrigen Seitenfläche. Mit anderen Worten ist die Materialdicke der Seitenfläche in Umfangsrichtung in einem Bereich, in dem das inneren Anlageelements vorgesehen ist, im Wesentlichen gleich zu der Materialdicke der übrigen Seitenfläche. Unter dem Begriff "entspricht im Wesentlichen" bzw. "im Wesentlichen gleich" wird insbesondere verstanden, dass die Materialdicke im Bereich des inneren Anlageelements mindestens 95%, bevorzugt 99 %, der Materialdicke der übrigen Seitenfläche ist. Dies ermöglicht, die Festigkeit des Käfigsegments zu verbessern. Des Weiteren kann verhindert werden, dass das zumindest eine Anlageelement im Gebrauch unter der Belastung durch die Wälzkörper einfedert wie es beispielsweise bei freigeschnittenen Lösungen vorkommen kann.

Ferner kann das innere Anlageelement in Umfangsrichtung um einen vorgegebenen Versatz nach innen versetzt sein. Insbesondere kann der vorgegebene Versatz maximal 60 % der Materialdicke der Seitenfläche betragen. In dem Fall, dass das Käfigsegment an einer Seitenfläche zumindest zwei innere Anlageelemente aufweist, kann das erste innere Anlageelement in Umfangsrichtung um einen vorgegebenen ersten Versatz nach innen versetzt sein und das zweite innere Anlageelement in Umfangsrichtung um einen vorgegebenen zweiten Versatz nach innen versetzt sein. Insbesondere kann der erste und der zweite vorgegebene Versatz unterschiedlich zueinander sein. Alternativ kann der erste und zweite Versatz auch gleich zueinander sein. Bevorzugt ist vorgegebene Versatz abhängig von einer größtmöglichen Wälzkörperanzahl, einem Material des Käfigsegments und/oder einer Materialdicke des Käfigsegments gewählt.

Gemäß einer bevorzugten Ausführungsform weist das Käfigsegment zumindest ein äußeres Anlageelement auf, wobei das zumindest eine äußere Anlageelement dazu ausgelegt ist, zumindest einen weiteren Wälzkörper zu kontaktieren, der umfänglich benachbart zu dem Käfigsegment angeordnet ist. Beispielsweise kann das Käfigsegment zumindest ein Seitenelement aufweisen, das in Umfangsrichtung eine erste Seitenfläche, die der Tasche zugewandt ist, und eine zweite Seitenfläche hat, der der Tasche abgewandt ist, wobei das zumindest eine äußere Anlageelement an der zweiten Seitenfläche ausgebildet ist, die der Tasche abgewandt ist. Insbesondere kann das innere Anlageelement an der ersten Seitenfläche ausgebildet sein und in die Tasche auskragen und das äußere Anlageelement kann an der zweiten Seitenfläche vorgesehen sein.

Bevorzugt ist das zumindest eine äußere Anlageelement als eine Vertiefung in der zweiten Seitenfläche des Käfigsegments ausgebildet. Beispielsweise kann eine solche Vertiefung durch Prägen gebildet werden. Ein als Vertiefung an einer der Tasche abgewandten Seitenfläche bzw. einer Außenfläche des Käfigsegments ausgebildetes Anlageelement bewirkt vorteilhafterweise eine geringere Flächenpressung durch eine größere Anlagefläche im Vergleich zu einer direkten Anlage des Wälzkörpers an einer planen Außenseite des Käfigsegments. Insbesondere kann ein als eine Vertiefung ausgebildetes weiteres Anlageelement anstatt einer Linienberührungen eine Flächenberührung ermöglichen, wodurch die wirkende Flächenpressung reduziert wird. Dafür kann die Vertiefung insbesondere abhängig von Größe und Form gewählt werden.

Ferner kann das Käfigsegment aus zumindest einem Blechbauteil mit zumindest einer Fügestelle zusammengefügt sein. Vorteilhafterweise kann die zumindest eine Fügestelle auch eine Einstellungsmöglichkeit bereitzustellen, sodass die Fügestelle dazu geeignet ist, Fertigungstoleranzen zu kompensieren. Ein Käfigsegment aus einem Blechbauteil ist insbesondere durch die Materialeinsparung und/oder die Reduzierung der Fertigungszeit gegenüber einem aus dem Vollen gefrästen einteiliger Käfig oder einem Segmentkäfig aus PEEK-Kunststoff günstiger, da zum einen der Materialeinsatz geringer und der Materialausnutzungsgrad höher ist und zum anderen die Fertigungszeit für den Käfig deutlich geringer ist als bei herkömmlichen Wälzlagerkäfigen.

Gemäß einer weiteren Ausführungsform liegt in einer Vorstufe der Fertigung das Käfigsegment als Bausatz vor, der aus einem oder mehreren, ebenen Metallblechbauteilen besteht, die dazu ausgelegt sind, zusammengesetzt zu werden, um das Käfigsegment auszubilden, wobei das zumindest eine Anlageelement in zumindest einem der Metallblechbauteile des Käfigsegments ausgebildet ist. Bevorzugt wird das zumindest eine Anlageelement in der Vorstufe der Fertigung ausgebildet. Dadurch kann ein Materialeinsatz und/oder Fertigungsaufwand reduziert werden. Beispielsweise kann das eine oder die mehreren Metallblechbauteile des Käfigsegments aus einem Metallblech geschnitten, insbesondere lasergeschnitten, gestanzt und/oder genibbelt sein, so dass vorteilhafterweise nur geringe Werkzeugkosten entstehen. Mit anderen Worten werden die für das Käfigsegment benötigten Trennlinien in dem Metallblech mittels Schneiden, Stanzen, Nibbeln oder dergleichen vorgesehen. Das bedeutet, dass zunächst die Kontur des Käfigsegment in das Metallblech geschnitten oder gestanzt wird und anschließend die Form des Käfigsegments aus dem Metallblech gelöst wird. Dabei kann ein Laser, ein Stanzwerkzeug, eine Nibbelmaschine oder dergleichen verwendet werden. Vorteilhafterweise kann das Ausschneiden des Käfigsegments in eine automatisierte Fertigung in einer Montagelinie und/oder Montagezelle integriert werden.

Gemäß einem weiteren Aspekt wird ein Wälzlagerkäfig, der aus einer Mehrzahl von voranstehend beschriebenen Käfigsegmenten zusammengesetzt ist, vorgeschlagen. Insbesondere kann die Mehrzahl von Käfigsegmenten über ein Kopplungselement zumindest zeitweise verbindbar sind. Beispielsweise können die Käfigsegment zu einem geschlossenen Käfig verbunden werden. Weiterhin kann beispielsweise jeder zweite Wälzkörper in einem Käfigsegment geführt und/oder von einem Käfigsegment umfasst sein. Alternativ kann auch ein Käfigsegment für jeweils einen Wälzkörper vorgesehen sein.

Gemäß noch einem weiteren Aspekt wird ein Wälzlager, insbesondere ein Großwälzlager, mit mindestens einem Innenring und mindestens einem Außenring vorgeschlagen, wobei zwischen dem Innenring und dem Außenring Wälzkörper angeordnet sind, wobei die Wälzkörper durch einen oben beschriebenen Wälzlagerkäfig gehalten werden. Bevorzugt kann jeder zweite Wälzkörper in einem Käfigsegment geführt und/oder von einem Käfigsegment umfasst sein. Dies ermöglicht, die Anzahl der in dem Wälzlager eingesetzten Rollen zu erhöhen, da nur jeder zweite Wälzkörper in einem Käfigsegment aufgenommen ist und somit die Anzahl der Käfigsegmente reduziert werden kann.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

### Kurze Figurenbeschreibung

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine perspektivische Ansicht eines Käfigsegments gemäß einer Ausführungsform;
- Fig. 2:: eine Draufsicht auf das Käfigsegment der Fig. 1,
- Fig. 3:: eine Schnittansicht entlang der Linie X-X aus der Fig. 2,
- Fig. 4:: eine Seitenansicht auf das Käfigsegment der Fig. 1,
- Fig. 5:: eine Schnittansicht entlang der Linie Y-Y aus der Fig. 4,
- Fig. 6:: eine Detailansicht eines Ausschnitts A aus der Fig. 5,
- Fig. 7:: eine perspektivische Ansicht eines Teils eines Wälzlagers gemäß einer Ausführungsform, und
- Fig. 8:: eine Schnittansicht durch ein Teil eines Wälzlagers gemäß einer Ausführungsform.

### Detaillierte Beschreibung der Erfindung

Im Folgenden werden gleiche oder funktionell gleichwirkende Elemente mit denselben Bezugszeichen gekennzeichnet.

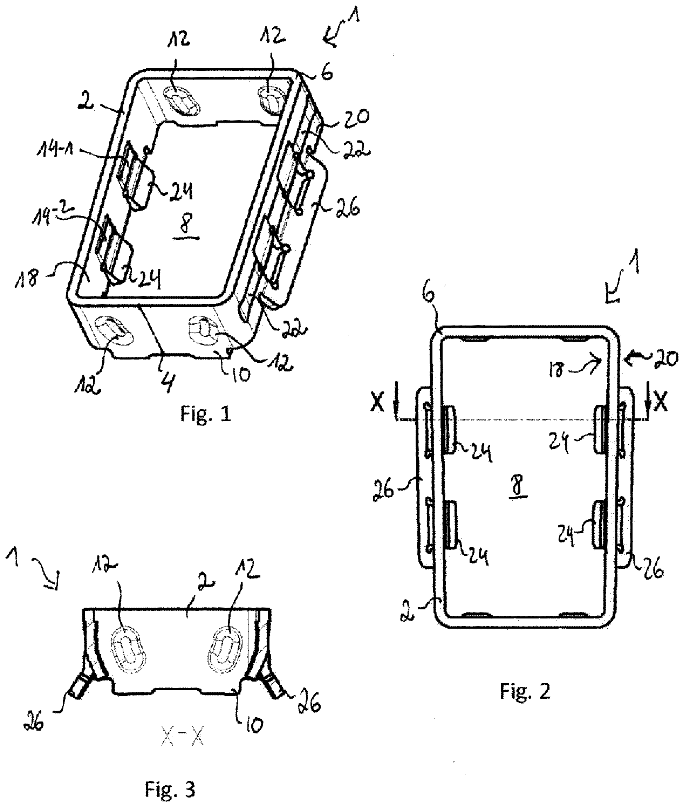

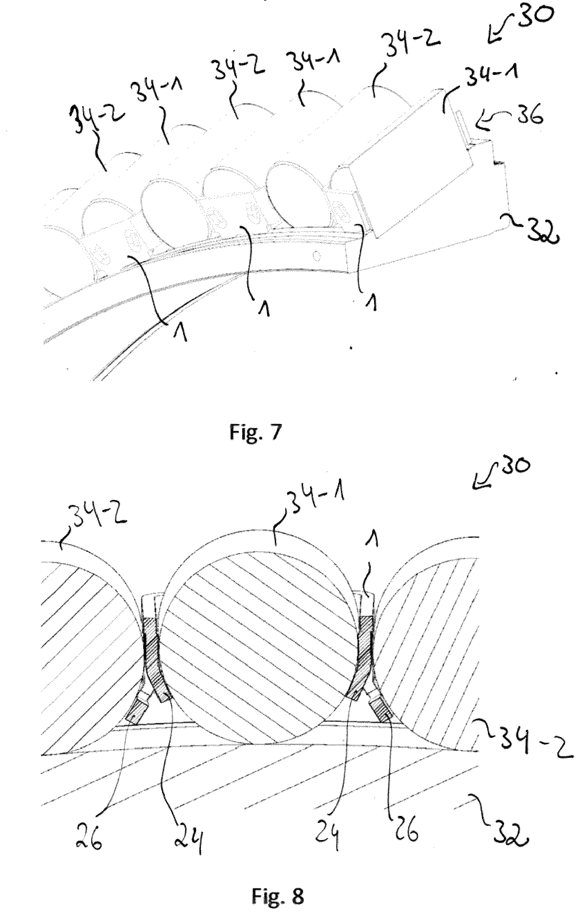

Mit Bezug auf die Figuren 1 bis 6 wird ein Käfigsegment 1 gemäß einem Ausführungsbeispiel gezeigt, das aus zumindest einem Metallblechbauteil 2 besteht, das an zumindest einer Fügestellen 4 zusammengefügt sind, um eine Taschen 8 zu bilden, die dazu eingerichtet ist, zumindest einen Wälzkörper 34 aufzunehmen. Alternativ kann das Käfigsegment 1 auch mehr als eine Fügestelle 4, zum Beispiel zwei oder vier Fügestellen, aufweisen. Das Käfigsegment 1 besteht in einer Vorstufe der Fertigung aus einem Bausatz mit ebenen Metallblechbauteilen. Das Käfigsegment 1 kann insbesondere in einem Wälzlager 30 (Fig. 7, 8) eingesetzt werden. Beispielsweise kann das Wälzlager 30 ein Rollenlager sein, d.h. ein Wälzlager mit rollenförmigen Wälzkörpern, wie zum Beispiel Kegelrollen, Zylinderrollen, Tonnen, Nadeln, und dergleichen.

Um das Käfigsegment 1 aus dem Metallblechbauteil 2 zusammenzusetzen, wird das Metallblechbauteil 2 jeweils an vorgegebenen Eckbereichen 6 gebogen und an den zwei Enden des Metallblechbauteils 2 zusammengefügt, wodurch die Fügestelle 4 gebildet wird. Das zusammengefügte Käfigsegment 1 bildet die Tasche 8, die dazu geeignet ist, zumindest einen Wälzkörper aufzunehmen, wobei die Eckbereiche 6 die Ecken des Käfigsegments 1 bilden. An den Enden der Metallblechbauteil können Ausrichtungselemente vorgesehen sein, die beispielsweise komplementär zueinander sind. Die Ausrichtungselemente können zum Beispiel rechteckige, wellenförmige, dreieckige und/oder mehreckige Verzahnungen sein.

An den Seiten 10 des Käfigsegment 1, die einer Stirnflächen des Wälzkörpers 34 gegenüberliegen, sind jeweils zwei Kontaktelement 12 vorgesehen, die in die Tasche 8 des Käfigsegments 1 auskragen und dazu ausgelegt sind, die Stirnfläche des Wälzkörpers 34 zu kontaktieren.

Ferner sind an dem Käfigelement 1 jeweils zwei innere Anlageelemente 14-1, 14-2 an einer Seitenfläche 18 des Käfigsegments gebildet, die einer Lauffläche des zumindest einen Wälzkörpers gegenüberliegt. Die inneren Anlageelemente 14 sind dazu ausgelegt, den Wälzkörper zu kontaktieren. Die vier inneren Anlageelemente 14 kragen insbesondere in die Tasche 8 des Käfigsegments 1 aus. Selbstverständlich ist es auch vorstellbar, dass an einer Seitenfläche 18 nur ein inneres Anlageelement 14 oder auch mehr als zwei innere Anlageelemente 14 vorgesehen sein können. Insbesondere kann die Anzahl der an einer Seitenfläche 18 vorgesehenen inneren Anlageelemente 14 von einer Größe des Wälzkörpers 34 abhängig sein.

Um die Festigkeit des Käfigsegments 1 zu erhöhen, sind die Anlageelemente 14 durchgängig mit der Seitenfläche 18 verbunden. Dies ermöglicht des Weiteren, mehr Steifigkeit des Käfigsegments 1 im Rollenanlagebereich zu erreichen, so dass bei gleichbleibender Festigkeit des Käfigsegments 1 eine geringere Materialstärke bzw. Materialdicke für das Käfigsegment 1 eingesetzt werden kann.

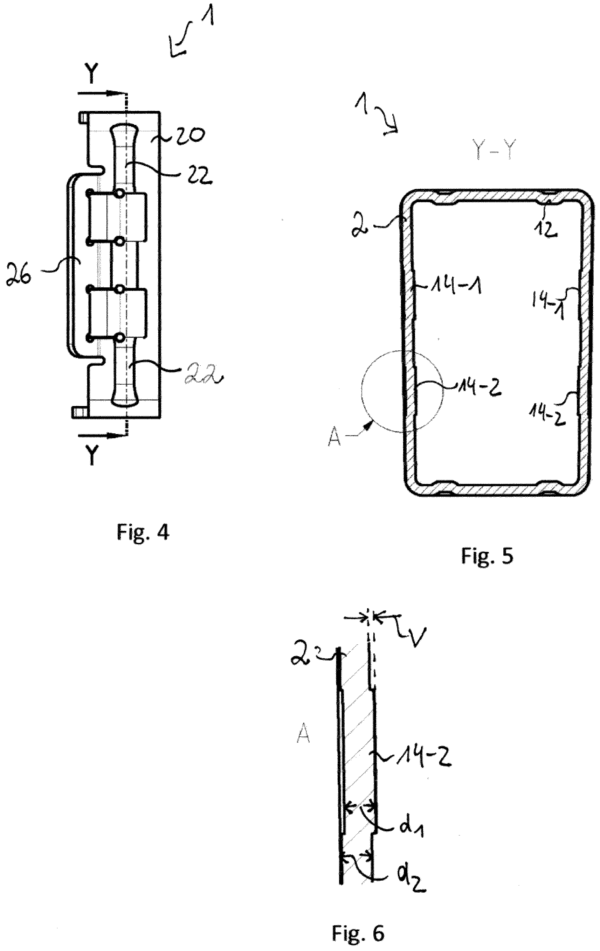

Wie insbesondere in Fig. 6 gesehen werden kann, entspricht eine Materialdicke d1 des inneren Anlageelements 14 im Wesentlichen der Materialdicke d2 der übrigen Seitenfläche 18. Ferner ist das innere Anlageelement 14 in Umfangsrichtung um einen vorgegebenen Versatz V nach innen versetzt. Insbesondere kann der vorgegebene Versatz V maximal 60 % der Materialdicke d2 der Seitenfläche betragen. Bevorzugt ist jedoch der Versatz V geringer als 60 % der Materialdicke der Seitenfläche, wie in Fig. 6 gesehen werden kann.

Bevorzugt kann das erste innere Anlageelement 14-1 in Umfangsrichtung um einen vorgegebenen ersten Versatz V nach innen versetzt sein und das zweite innere Anlageelement 14-2 kann in Umfangsrichtung um einen vorgegebenen zweiten Versatz V nach innen versetzt sein. Insbesondere kann der erste und der zweite vorgegebene Versatz V unterschiedlich zueinander sein. Alternativ kann der erste und zweite Versatz V auch gleich zueinander sein. Dabei kann der vorgegebene Versatz V abhängig von einer größtmöglichen Wälzkörperanzahl, einem Material des Käfigsegments und/oder einer Materialdicke des Käfigsegments gewählt werden.

Ferner weist das Käfigsegment 1 auf den der Tasche 8 abgewandten Seitenflächen 20 bzw. der Außenfläche vier äußere Anlageelemente 22 auf. Wie der Fig. 4 entnommen werden kann, sind die äußeren Anlageelemente 22 jeweils als eine Vertiefung in der zweiten Seitenfläche 20 des Käfigsegments 1 ausgebildet.

Die äußeren Anlageelemente 22 sind dazu ausgebildet, einen weiteren Wälzkörper zu kontaktieren, der umfänglich benachbart zu dem Käfigsegment 1, d.h. auf der Außenseite des Käfigsegments, angeordnet ist. Dies ermöglicht beispielsweise, dass ein Wälzlagerkäfig bereitgestellt werden kann, der aus einer Mehrzahl von Käfigsegmenten 1 zusammengesetzt ist, wobei die Mehrzahl von Käfigsegmenten 1 über ein Kopplungselement zumindest zeitweise verbindbar sind und lediglich jeder zweite Wälzkörper in einem Käfigsegment 1 geführt und/oder von einem Käfigsegment 1 umfasst ist. Dieser Fall hat den Vorteil, dass die Anzahl der in dem Wälzlager eingesetzten Rollen erhöht werden kann, da nur jeder zweite Wälzkörper in einem Käfigsegment 1 aufgenommen ist und somit der Anteil des Umfangs, der durch das Material des Käfigsegments selbst in Anspruch genommen wird, reduziert werden kann.

Sowohl das innere Anlageelement 14 als auch das äußere Anlageelement 22 werden durch Umformen des Käfigsegments 1 gebildet. Dabei kann vorteilhafterweise ein Umformverfahren eingesetzt werden, bei dem die Seitenfläche 18, 20 des Käfigsegments 1 nicht vollständig durchtrennt wird bzw. bei dem lediglich im Bereich einer Materialdicke der Seitenfläche 18, 20 umgeformt wird. Dies ermöglicht, dass durch die immer noch vorhandene stoffschlüssige Verbindung mehr Festigkeit erreicht wird als bei den mehr als die Blechdicke durchgesetzten und damit teilweise freigeschnittenen Laschen, welche bei Belastung zusätzlich auch einfedern können.

Um im Gebrauch ein in radialer Richtung auftretendes Abheben des Käfigsegments 1 von dem in der Tasche 8 aufgenommenen Wälzkörper 34-1 (Fig. 7, 8) zu verhindern, sind an der der Tasche 8 zugewandten Seitenfläche 18 Haltelaschen 24 vorgesehen, die nach innen in die Tasche 8 auskragen und so in die Tasche 8 gebogen sind, dass sie in radialer Richtung unterhalb des Wälzkörpers liegen. Des Weiteren ist an der der Tasche 8 abgewandten Seitenfläche 20 eine breite Haltelasche 26 vorgesehen, die nach außen auskragt und so gebogen ist, dass sie in radialer Richtung unterhalb des benachbart zum Käfigsegment angeordneten Wälzkörpers 34-2 liegt, um im Gebrauch ein in radialer Richtung auftretendes Abheben des Käfigsegments 1 von dem benachbart zum Käfigsegment angeordneten Wälzkörpers 34-2 zu verhindern.

Fig. 7 und 8 zeigen einen Teil eines Wälzlager 30 gemäß einer Ausführungsform. Das Wälzlager 30 kann insbesondere ein Großwälzlager mit einem Durchmesser von mehr als einem Meter sein und weist einen Innenring 32 und mindestens einen Außenring (nicht dargestellt) auf. Zwischen dem Innenring 32 und dem Außenring sind Wälzkörper 34 angeordnet, wobei die Wälzkörper 34 durch einen Wälzlagerkäfig 36 gehalten werden, der aus einer Mehrzahl der oben beschriebenen Käfigsegmente 1 gebildet ist. Dabei ist jeder zweite Wälzkörper 34-1 in einem Käfigsegment 1 geführt und/oder von einem Käfigsegment 1 umfasst.

Zusammenfassend wird, um die Festigkeit des Käfigsegment 1 zu erhöhen, das Käfigsegment 1 zumindest an einer Seitenfläche 18, die einer Lauffläche des in der Tasche 8 des Käfigsegments 1 aufgenommenen Wälzkörpers gegenüberliegt, zumindest ein Anlageelement 14 vorgesehen, das in die Tasche 8 des Käfigsegments 1 auskragt und dazu ausgelegt ist, den Wälzkörper zu kontaktieren. Dabei ist das Anlageelement 14 durchgängig mit der Seitenfläche 18 verbunden ist. Dadurch, dass das Anlageelement 14 durchgängig mit der Seitenfläche 18 verbunden ist, kann mehr Steifigkeit im Rollenanlagebereich erreicht werden. Außerdem kann bei gleichbleibender Festigkeit des Käfigsegments eine geringere Materialstärke bzw. Materialdicke für das Käfigsegment eingesetzt werden, wodurch insbesondere in Umfangsrichtung ein Platzbedarf für das Käfigsegment reduziert werden kann. Dies ermöglicht darüber hinaus mehr Wälzkörper im Wälzlager unterzubringen.

### Bezugszeichenliste

- 1: Käfigsegment
- 2: Metallblechbauteil
- 4: Fügestelle
- 6: Eckbereich
- 8: Tasche
- 10: Stirnseite
- 12: Kontaktelement
- 14: Anlageelement
- 18,20: Seitenfläche
- 22: weiteres Anlageelement
- 24: Haltelasche
- 26: Haltelasche
- 30: Wälzlager
- 32: Innenring
- 34: Wälzkörper
- 36: Wälzlagerkäfig

- d1, d2: Materialdicke
- V: Versatz

## Patentansprüche

1. Käfigsegment für einen Segmentkäfig (1), insbesondere für Großwälzlager, wobei das Käfigsegment (1) eine Tasche (8) bildet, die dazu geeignet ist, zumindest einen Wälzkörper aufzunehmen,
**dadurch gekennzeichnet, dass** das Käfigsegment (1) zumindest an einer Seitenfläche (18), die einer Lauffläche des zumindest einen Wälzkörpers (34-1) gegenüberliegt, zumindest ein inneres Anlageelement (14) aufweist, das in die Tasche (8) des Käfigsegments (1) auskragt und dazu ausgelegt ist, den zumindest einen Wälzkörper (34-1) zu kontaktieren, wobei das zumindest eine innere Anlageelement (14) durchgängig mit der Seitenfläche (18) verbunden ist.

2. Käfigsegment (1) gemäß Anspruch 1, wobei eine Materialdicke (d1) des inneren Anlageelements (14) im Wesentlichen der Materialdicke (d2) der übrigen Seitenfläche (18) entspricht.

3. Käfigsegment (1) gemäß Anspruch 1 oder 2, wobei das innere Anlageelement (14) in Umfangsrichtung um einen vorgegebenen Versatz (V) nach innen versetzt ist.

4. Käfigsegment (1) gemäß einem der vorherigen Ansprüche, wobei das Käfigsegment (1) an der zumindest einen Seitenfläche (18) zumindest ein erstes und ein zweites inneres Anlageelement (14-1, 14-2) aufweist, die in axialer Richtung voneinander beabstandet sind.

5. Käfigsegment (1) gemäß Anspruch 4, wobei das erste innere Anlageelement (14-1) in Umfangsrichtung um einen vorgegebenen ersten Versatz (V) nach innen versetzt ist und das zweite innere Anlageelement (14-2) in Umfangsrichtung um einen vorgegebenen zweiten Versatz (V) nach innen versetzt ist.

6. Käfigsegment (1) gemäß Anspruch 5, wobei der erste und der zweite vorgegebene Versatz (V) unterschiedlich zueinander sind.

7. Käfigsegment (1) gemäß einem der Ansprüche 3 bis 6, wobei der vorgegebene Versatz (V) abhängig von einer größtmöglichen Wälzkörperanzahl, einem Material des Käfigsegments (1) und/oder einer Materialdicke (d2) des Käfigsegments (1) gewählt ist.

8. Käfigsegment (1) gemäß einem der vorherigen Ansprüche, wobei ferner das Käfigsegment (1) an zumindest einer Seitenfläche (20), die der Tasche (8) abgewandt ist, zumindest ein äußeres Anlageelement (22) aufweist, wobei das zumindest eine äußere Anlageelement (22) dazu ausgelegt ist, zumindest einen weiteren Wälzkörper (34-2) zu kontaktieren, der umfänglich benachbart zu dem Käfigsegment (1) angeordnet ist.

9. Käfigsegment gemäß Anspruch 8, wobei das zumindest eine äußere Anlageelement (22) als eine Vertiefung in einer Seitenfläche (20) des Käfigsegments (1) gebildet ist.

10. Käfigsegment (1) gemäß einem der vorherigen Ansprüche, wobei das Käfigsegment (1) aus zumindest einem Blechbauteil (2) mit zumindest einer Fügestelle (4) zusammengefügt ist.

11. Wälzlagerkäfig (36) , der aus einer Mehrzahl von Käfigsegmenten (1) nach Anspruch 1 bis 10 zusammengesetzt ist.

12. Wälzlager (30), insbesondere ein Großwälzlager, mit mindestens einem Innenring (32) und mindestens einem Außenring, wobei zwischen dem Innenring (32) und dem Außenring Wälzkörper (34) angeordnet sind, wobei die Wälzkörper (34) durch einen Wälzlagerkäfig (36) nach Anspruch 11 gehalten sind.

13. Wälzlager (30) gemäß Anspruch 12, wobei jeder zweite Wälzkörper (34-1) in einem Käfigsegment (1) geführt und/oder von einem Käfigsegment (1) umfasst ist.
